Europäisches Patentamt

(19) European Patent Office

Office européen des brevets

(11) Numéro de publication : **0 320 494 B1**

# (12) FASCICULE DE BREVET EUROPEEN

(45) Date de publication du fascicule du brevet :
09.10.91 Bulletin 91/41

(21) Numéro de dépôt : **89101122.3**

(22) Date de dépôt : **21.04.87**

(51) Int. Cl.⁵ : **B29D 30/06, B29C 43/36**

---

## (54) Moule rigide pour le moulage et la vulcanisation de pneumatiques.

---

(30) Priorité : 25.04.86 FR 8606158

(43) Date de publication de la demande :
**14.06.89 Bulletin 89/24**

(60) Numéro de publication de la demande initiale
en application de l'article 76 CBE : **0 242 840**

(45) Mention de la délivrance du brevet :
**09.10.91 Bulletin 91/41**

(84) Etats contractants désignés :
**AT BE CH DE ES FR GB GR IT LI LU NL SE**

(56) Documents cités :
**FR-A- 1 402 373**
**FR-A- 2 480 667**
**FR-A- 2 529 505**
**GB-A- 1 109 465**

(73) Titulaire : **COMPAGNIE GENERALE DES
ETABLISSEMENTS MICHELIN-MICHELIN &
CIE
4, rue du Terrail
F-63000 Clermont-Ferrand (FR)**

(72) Inventeur : **Laurent, Daniel
23, avenue de la Plaine Fleurie
F-38240 Meylan (FR)**
Inventeur : **Sebe, Marc
ILM Lavoisier 22, rue de Nohanent - No 2101
F-63100 Clermont-Ferrand (FR)**

(74) Mandataire : **Bauvir, Jacques et al
Michelin & Cie Service K. Brevets
F-63040 Clermont-Ferrand Cédex (FR)**

## Description

La présente invention se rapporte aux moules utilisés pour le moulage et la vulcanisation des pneumatiques.

Dans la fabrication des pneumatiques neufs, un type de moule s'est généralisé : il comporte deux parties latérales, chacune servant au moulage d'un flanc du pneumatique, et, pour le moulage de la bande de roulement, une couronne périphérique divisée en plusieurs segments ayant des faces latérales perpendiculaires à l'axe du moule et des faces transversales radiales (voir par exemple le brevet US 3779677). Pour fermer un tel moule, il faut déplacer les segments radialement vers l'axe et rapprocher axialement les parties latérales. En position de fermeture seulement, ces différents éléments (parties latérales et segments) sont jointifs et délimitent la surface extérieure du pneumatique, alors que pendant tout le mouvement de fermeture, ces éléments ne sont pas jointifs. L'ébauche crue du futur pneumatique doit être fermement appliquée et maintenue contre le moule pour obtenir les dimensions géométriques voulues et pour, le cas échéant, imprimer la sculpture de la bande de roulement. A cette fin, on emploie usuellement une membrane souple qui vient s'appliquer contre la surface intérieure de l'ébauche, par gonflage à la pression requise, et qui provoque ou tend à provoquer une expansion de l'ébauche. Pour assurer un moulage de bonne qualité, il est nécessaire que le caoutchouc soit soumis à une pression de moulage de l'ordre de 10 bars. Cette pression est appliquée par l'intermédiaire de la membrane.

Pour lutter contre l'apparition de ces bavures, le brevet CA 765745 propose de réaliser des segments comportant des faces transversales parallèles. La couronne périphérique comporte donc alternativement des segments à faces transversales parallèles et des segments dont les faces transversales sont parallèles aux faces transversales des segments adjacents. Ainsi, en fin de fermeture du moule, les segments à faces transversales parallèles peuvent glisser entre les autres segments, à la manière d'un piston, ce qui permet d'éviter de pincer du caoutchouc entre deux segments adjacents. Cette proposition n'a cependant pas été adoptée. Une autre méthode, celle-ci très répandue, permettant de limiter autant que possible les bavures de moulage consiste à ne provoquer la montée en pression de la membrane que lorsque le moule est en position de fermeture.

Le moulage et la vulcanisation d'un pneumatique en caoutchouc avec les moyens classiques, à savoir un moule à segments pour définir la surface extérieure du pneumatique et une membrane souple en caoutchouc pour définir la surface intérieure du pneumatique est depuis longtemps la seule solution industrielle retenue. Cela tient au fait que la membrane souple permet de maîtriser la pression de moulage et cela tient également aux contraintes dictées par le procédé de fabrication de l'ébauche de pneumatique à l'état non vulcanisé. Cependant, cette technique ne permet pas de maîtriser parfaitement la forme et les dimensions intérieures du pneumatique, ainsi que la position exacte des constituants.

Un autre inconvénient résultant de l'utilisation des techniques de moulage et de vulcanisation de l'art antérieur est lié aux comportements thermiques différents des diverses pièces en contact avec le pneumatique pendant la vulcanisation, à savoir les parties latérales et la couronne de segments métalliques d'une part, et la membrane en caoutchouc d'autre part. Ceci complique l'élaboration des lois de vulcanisation ainsi que leur mise en oeuvre.

D'autre part, il est également connu d'utiliser un noyau rigide démontable pour définir la surface intérieure de l'ébauche du futur pneumatique. A titre illustratif, on consultera par exemple le brevet US 1388255 qui montre un moule tel que défini dans le préambule des revendications 1, 2, et 3, dans lequel un noyau rigide définit, avec le moule extérieur, un espace de moulage indéformable. En pratique, on ne peut les utiliser que pour réaliser des pneumatiques en coulant ou en injectant dans ledit espace un matériau à l'état liquide ou pâteux. C'est le procédé de réalisation des pneumatiques en polyuréthanne, illustré par exemple par le brevet US 4279856. L'état de la technique réserve donc l'utilisation de ces moules totalement rigides aux procédés de coulage ou d'injection du matériau à mouler à l'intérieur du moule définissant alors totalement la forme du futur pneumatique. Ces procédés, qui font l'objet de recherches constantes, ne se sont pas imposés car le positionnement des éléments de renforcement (câblés, fils, tringles), qui restent indispensables, s'avère excessivement difficile.

Par contre, si l'ébauche de pneumatique (ébauche signifiant dans le présent mémoire tous les stades avant la vulcanisation) est réalisée par simple superposition de matériaux utilisés classiquement dans l'industrie du pneumatique (à savoir du caoutchouc non vulcanisé, des éléments textiles et/ou métalliques de renforcement), lesdits matériaux étant disposés et empilés en fonction de leur place finale dans le pneumatique vulcanisé, alors on associe toujours, à un moule du type décrit dans le brevet US 3779677, une membrane souple dont le déploiement à l'intérieur de l'ébauche de pneumatique est aisé et qui permet de commander le paramètre pression de moulage.

Si l'on associe un noyau rigide à un moule à segments du type usuel décrit par le brevet US n° 3779677, les segments vont commencer à pénétrer dans l'ébauche crue pour imprimer la sculpture de la bande de roulement bien avant la fermeture complète du moule. Lorsque le moule n'est pas fermé totalement, il subsiste des interstices entre tous les segments. Le caoutchouc cru peut ainsi fluer entre les segments. Selon le taux d'entaillement de la sculpture et les mouvements de caoutchouc cru résultants, ce fluage va provoquer d'importantes bavures et même l'impossibilité d'assurer la fermeture correcte du moule du fait de la trop grande quantité de gomme présente dans les interstices, empêchant le rapprochement circonférentiel relatif des segments qui est nécessaire pour permettre leur mouvement radial jusqu'à la fermeture totale. Dès lors, on considère qu'un moule totalement rigide doit être fermé avant l'introduction dans le moule des constituants à mouler.

L'objectif de l'invention est donc d'améliorer la précision de fabrication des pneumatiques en caoutchouc, d'améliorer le positionnement des constituants, et d'améliorer l'échange thermique nécessaire à la vulcanisation.

Pour atteindre ces objectifs, la solution selon l'invention consiste à utiliser un moule totalement rigide pour imposer la forme et les dimensions définitives du pneumatique réalisé à partir d'une ébauche non vulcanisée, à adapter ce moule pour, grâce au contact glissant de pièces du moules l'une sur l'autre au moins pendant la phase finale du mouvement de fermeture, permettre ladite fermeture autour d'une ébauche en caoutchouc comportant tous les constituants du futur pneumatique, et à profiter du différentiel de dilatation entre le caoutchouc non vulcanisé et le matériau constituant le moule rigide, dû à l'élévation de température lors de la vulcanisation, pour parvenir à une pression de moulage adéquate.

Différentes variantes du moule selon l'invention sont données aux revendications 1 à 3.

Un procédé de fabrication d'un pneumatique utilisant un tel moule est également proposé dans une quatrième revendication indépendante.

L'invention sera mieux comprise en consultant les figures suivantes et la description qui s'y rapporte, illustrant de manière non limitative une mise en oeuvre particulièrement avantageuse du moule selon l'invention.

— La figure 1 est une vue en coupe radiale partielle et schématique d'un moule selon l'invention, représenté en position fermée.

— La figure 2 est une coupe suivant l'axe II, II représenté à la figure 1.

— La figure 3 est une vue en plan de la couronne périphérique de segments en position d'ouverture partielle, selon un premier mode de réalisation du moule.

— La figure 4 est une vue en coupe radiale d'une variante de réalisation de l'invention.

— La figure 5 est une vue en plan de la couronne périphérique de segments, en position fermée, représentant un autre mode de réalisation du moule.

— La figure 6 est une vue en plan de la même couronne périphérique de segments, en position d'ouverture partielle.

— La figure 7 est une vue en plan de la couronne périphérique de segments, représentant un autre mode de réalisation.

Le moule, selon l'invention, est constitué par une couronne périphérique 1 de segments permettant le moulage de la bande de roulement, et par deux parties latérales 2, chacune assurant le moulage d'un flanc d'un pneumatique, ainsi que par un noyau 3 rigide démontable définissant la surface intérieure du pneumatique. De la sorte, le moule assure le moulage des surfaces extérieure et intérieure du pneumatique et définit donc complètement un espace de moulage.

Le moule selon l'invention permet de mouler et vulcaniser les pneumatiques avec une précision géométrique très supérieure à celle que l'on peut atteindre par le procédé classique de moulage avec une membrane souple car toutes les pièces du moule qui imposent la géométrie finale du pneumatique sont rigides alors que dans la technique usuelle, il faut tenir compte des déformations possibles et du comportement de la membrane gonflable. Par "rigide", il faut comprendre "substantiellement non déformable" par comparaison à une membrane de vulcanisation gonflable qui est par définition et par construction très déformable par rapport aux autres pièces d'un moule classique qui ne subissent que de très faibles déformations élastiques dues aux sollicitations exercées par la pression de moulage. Il en résulte qu'il est possible de réaliser une bien plus grande variété de formes, ce dont le concepteur de pneumatiques peut profiter pleinement. La vulcanisation est donc effectuée à volume constant au lieu de la réaliser à pression constante comme c'est le cas dans la technique usuelle. Le fait de pouvoir utiliser avec le moule conforme à l'invention une pression de moulage différente entre les différentes zones du pneumatique constitue encore un atout supplémentaire.

Le moulage de la surface intérieure du pneumatique étant assuré par un noyau ayant pour caractéristique essentielle la rigidité, cela permet de choisir parmi le vaste éventail de matériaux permettant d'obtenir cette caractéristique. En particulier, le noyau peut être métallique comme les autres pièces du moule. Le flux calorifique apporté par l'intérieur au pneumatique se propage alors vers le caoutchouc cru sans rencontrer l'écran thermique constitué par les membranes gonflables traditionnelles, réalisées en caoutchouc. De plus, le coefficient d'échange thermique entre un tel noyau métallique et le caoutchouc cru est excellent, bien meilleur que lors de l'utilisation d'une membrane souple. Cela constitue encore un avantage appréciable de l'invention. Il est en effet possible d'avoir un temps de cuisson très réduit sans augmenter la température de vulcanisation et donc d'augmenter la productivité des appareillages de vulcanisation sans aucune pénalisation au niveau des matériaux.

La suppression du recours à une membrane souple en caoutchouc constitue aussi un avantage intrinsèque de l'invention. L'usage d'une telle membrane est en effet coûteux parce que sa durée de vie est très faible et parce qu'il nécessite d'utiliser et donc d'appliquer des produits anticollants.

De plus, du fait que la surface intérieure du pneumatique est définie par un noyau rigide tout en garantissant que la fermeture du moule est possible et que le moulage ne produira aux interfaces des pièces du moule, que des bavures de très petite taille, compatibles avec un très haut niveau de qualité du produit moulé, on peut utiliser ledit noyau rigide comme support de l'ébauche de pneumatique dès le début de sa fabrication. Grâce au moule selon l'invention, on s'affranchit dans une très large mesure des propriétés de résistance mécanique des mélanges de caoutchouc à l'état non vulcanisé puisque ces mélanges ne sont pas sollicités mécaniquement, contrairement à ce qui est le cas lorsque l'ébauche du pneumatique subit, à l'état cru, des conformations parfois importantes. Ainsi le moule selon l'invention ouvre la voie à l'utilisation de mélanges différents de ceux utilisables jusqu'à présent dans la fabrication de pneumatiques, homogènes ou hétérogènes, notamment des mélanges moins onéreux et/ou conférant des performances meilleures au pneumatique.

De même, la suppression du recours à la moindre conformation au cours de la fabrication du pneumatique rend ladite fabrication beaucoup plus précise puisque les produits qui entrent dans la constitution du pneumatique, une fois posés sur le noyau rigide, ne subissent plus de mouvements relatifs jusqu'à ce que la structure soit figée par la vulcanisation. Par exemple, l'angle de pose des fils de renforcement constituant la ceinture d'un pneumatique à carcasse radiale ne subit plus de variations dues à ces conformations.

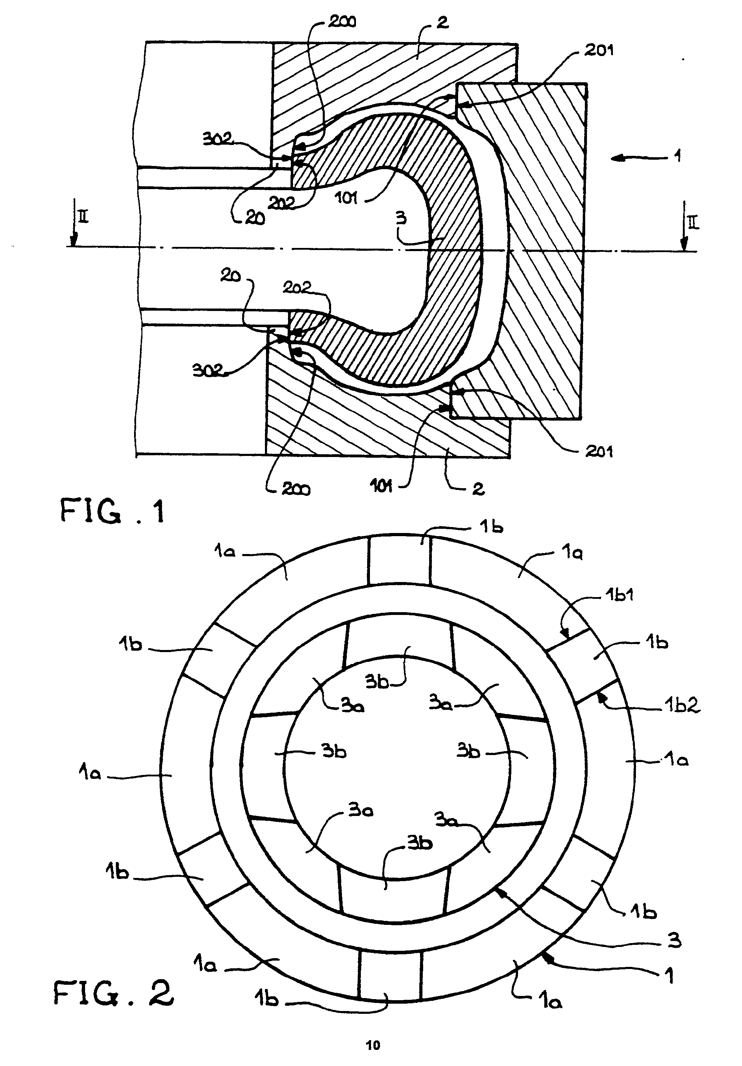

A la figure 1, on voit que chaque segment vient, en position de fermeture, en concordance avec les parties latérales 2 par le biais de surfaces de contact 101. Chaque segment comporte également des faces transversales (non visibles à la figure 1) jointives, en position de fermeture, avec les faces transversales des segments adjacents. Les faces radialement intérieures 302 du noyau 3 viennent, en position de fermeture, en contact avec les faces 202 correspondantes aménagées dans le prolongement 20 de chaque partie latérale 2 au-delà de la zone 200 assurant le moulage de la surface radialement intérieure des talons du pneumatique. Ces faces 202 et 302 sont cylindriques, coaxiales, et telles qu'elles puissent glisser l'une sur l'autre à la manière d'un piston dans un alésage.

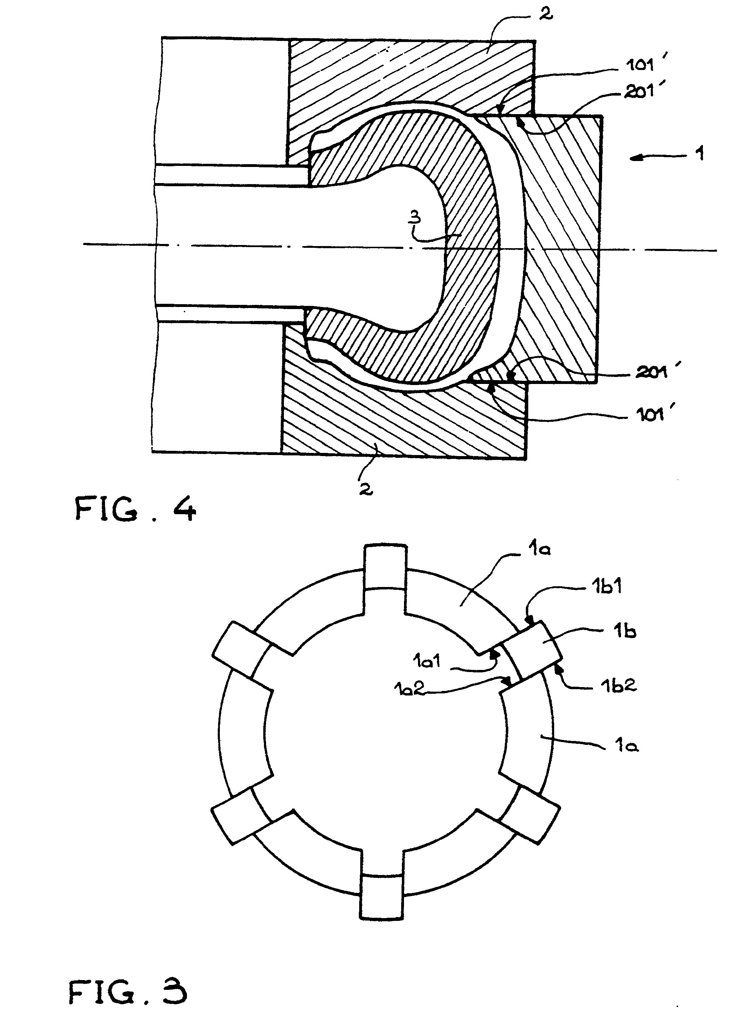

Se reportant plus particulièrement aux figures 2 et 3, on aperçoit que le moule à segments selon le premier mode de réalisation comporte un noyau rigide 3 et deux types de segments (les segments du premier type appelé type a et désignés par la référence 1a et les segments du second type appelé type b et désignés par la référence 1b) disposés alternativement le long de la périphérie. Le noyau rigide 3 est divisé lui aussi en éléments de deux types (3a et 3b) disposés alternativement. Les éléments 3b de type b comportent des faces transversales dont les prolongements se coupent radialement à l'extérieur et les éléments 3a de type a sont de forme complémentaire pour définir la surface intérieure du pneumatique, comme décrit par exemple dans le brevet US 4279856. De la sorte, le pneumatique imposant que l'introduction et l'extraction des éléments du noyau se fasse par le seul accès possible, à savoir entre les talons du pneumatique et radialement à l'intérieur de chaque talon, il est toujours possible de terminer le montage du noyau et de commencer son démontage par les éléments 3b de type b, ces derniers ne comportant pas de volume en contre-dépouille pour un mouvement radial vers l'axe du pneumatique.

En revenant maintenant à la couronne 1 de segments et suivant un principe similaire, l'un des deux types de segments (type b) présente des faces transversales 1b1 et 1b2 parallèles entre elles, ce qui permet d'obtenir un effet de piston lors de la fermeture des segments, en fermant les segments de type a avant les segments de type b.

On va à présent détailler le procédé de mise en oeuvre d'un tel moule en expliquant les mouvements de fermeture grâce aux mêmes figures 1, 2 et 3.

Un noyau 3 constitué d'éléments 3a et 3b de deux types complémentaires est introduit à l'intérieur de l'ébauche crue de pneumatique, comme décrit ci-dessus ou bien l'ébauche de pneumatique est construite sur le noyau monté. Ensuite, les parties latérales 2 sont rapprochées du noyau portant l'ébauche crue du pneumatique jusqu'à ce que les prolongements 20 se glissent sous les faces 302 du noyau 3, sans cependant aller jusqu'à la position de fermeture.

A ce stade, le caoutchouc n'est pas encore mis en compression. Ensuite, les segments sont amenés à leur position de fermeture en respectant la cinématique pour laquelle ils sont conçus, à savoir les segments 1a avant les segments 1b. L'ébauche supportée par le noyau rigide 3 se trouve dans sa géométrie finale avant que l'on ferme le moule. Lors du rapprochement radial des segments 1a, le moulage de la sculpture de la bande de roulement va débuter avant que lesdits segments ne soient en position de fermeture. Ce faisant, du caoutchouc cru va fluer de part et d'autre desdits segments 1a. En position de fermeture desdits segments (voir figure 3), toutes les faces transversales des segments sont jointives deux à deux alors que les segments 1b sont encore en retrait au moins partiellement. Puisque toutes les faces transversales sont jointives (1b1 et 1a1, 1b2 et 1a2), le rapprochement radial final des segments 1b permet de repousser le caoutchouc cru ayant flué sous l'effet du moulage par les segments 1a tout en assurant le moulage complet de la bande de roulement.

Ainsi, les segments de type 1b, agissant à la manière d'un piston entre les segments de type 1a, permettent d'éviter de pincer du caoutchouc cru entre les faces transversales des segments.

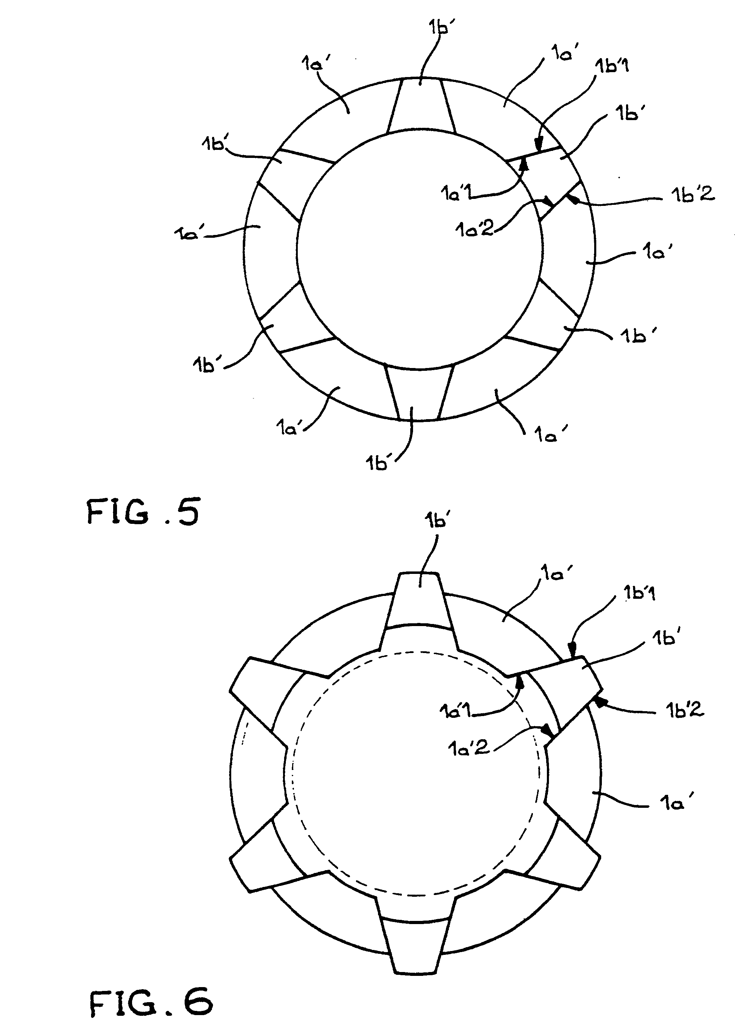

Finalement, les parties latérales 2 sont rapprochées jusqu'à leur position de fermeture, ce qui permet là encore de repousser le caoutchouc ayant pu fluer de part et d'autre de la couronne 1 de segments. En effet, les surfaces de contact entre parties latérales 2 et couronne 1 périphérique de segments sont engendrées par une droite constamment parallèle au dernier mouvement de fermeture du moule. Dans le mode de réalisation décrit, chaque surface de contact 101 et 201 est un cylindre dont l'axe est confondu avec celui du moule. Pour éviter toute bavure, le rapprochement axial des parties latérales 2 est donc effectué au moins en partie après la fermeture de tous les segments. En variante, chaque surface de contact 101' et 201' peut être engendrée par une droite constamment perpendiculaire à l'axe du moule, comme on le voit à la figure 6. Dans ce cas, le rapprochement axial des parties latérales jusqu'à leur position finale doit précéder tout mouvement de fermeture des segments.

Pour obtenir tous les mouvements des différents éléments du moule qui viennent d'être indiqués, l'homme du métier peut utiliser tout moyen approprié, notamment des vérins mécaniques, hydrauliques ou pneumatiques.

On voit donc que la fermeture complète du moule se fait par glissement des pièces les unes sur les autres, sans qu'il n'y ait jamais de rapprochement d'un bord d'une pièce vers une autre pièce. Grâce à cela, on peut concevoir un moule totalement rigide, qui puisse cependant être fermé, au besoin même en nécessitant d'appliquer une pression de fermeture à l'une ou plusieurs de ces pièces.

Les figures 5 et 6 illustrent un autre mode de réalisation d'un moule selon l'invention. Ce mode de réalisation prévoit un agencement différent des faces transversales des segments. Ainsi, on peut encore empêcher tout pincement de caoutchouc cru entre les faces transversales des segments lorsque le moule à segments comporte deux types de segments 1a' et 1b' disposés alternativement le long de la périphérie, l'un des deux types de segments (type b) présentant des faces transversales 1b'1 et 1b'2 dont les prolongements radiaux présentent une intersection radialement à l'extérieur du moule, l'autre type de segment (type a) présentant, lorsque le moule est en position de fermeture, des faces transversales 1a'1 et 1a'2 jointives aux précédentes 1b'1 et 1b'2. Les mouvements de rapprochement radial des deux types de segments doivent être coordonnés. Le procédé de mise en oeuvre de ce mode de réalisation du moule selon l'invention est caractérisé en ce que, au moins en phase finale de fermeture du moule, toutes les faces transversales des segments sont jointives deux à deux et, le mouvement de rapprochement des segments de type a étant imposé, le rapprochement des segments de type b se fait suivant une cinématique imposée par le glissement des faces transversales des segments de type b sur les faces transversales des segments de type a.

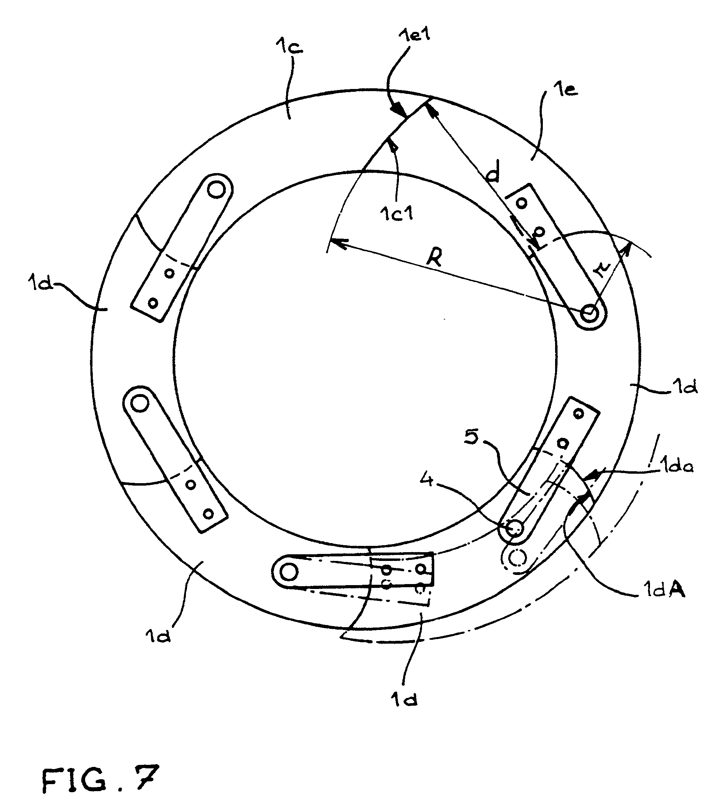

La figure 7 illustre un autre mode de réalisation des segments d'un moule selon l'invention. Il est encore possible d'obtenir, selon l'invention, un glissement des faces transversales des segments adjacents au moins pendant une partie du mouvement de fermeture d'un moule comprenant un nombre n quelconque de segments lorsque lesdits segments sont reliés circonférentiellement entre eux et enserrent l'article à mouler à la manière d'une chaîne. Le moule à segments selon ce mode de réalisation de l'invention est caractérisé en ce que les faces transversales de chaque segment (1c, 1d, 1e) sont telles que leur intersection avec tout plan perpendiculaire à l'axe du moule est un arc de cercle. Le moule fermé est représenté à la figure 7 en traits pleins. On a superposé, en traits interrompus, la représentation d'un segment 1d en position d'ouverture. La chaîne de segments débute par le segment 1c, se continue par les segments 1d, et se termine par le segment 1e. Chaque segment, sauf le premier (1c) est mobile en rotation autour d'un axe 4 situé dans un segment adjacent, auquel il est relié par un bras 5. Chaque axe 4 est parallèle à l'axe du moule. Afin de permettre un mouvement relatif entre les segments, les faces transversales 1da et 1dA des segments adjacents considérés sont définies par le déplacement en rotation d'une courbe contenue dans un plan passant par et basculant autour de l'axe de rotation. Dans la variante de réalisation la plus simple, cette courbe est une droite et définit une face transversale en forme de cylindre partiel, représenté dans la vue en plan (figure 7) par un arc de cercle de rayon r, r étant la distance séparant chaque point d'une face transversale de l'axe de rotation considéré. Toutes les faces transversales sont ainsi définies, sauf la première face 1c1 (appartenant au premier segment 1c) et la dernière face 1e1 (appartenant au dernier segment 1e) qui sont définies d'une manière analogue, mais selon le rayon R avec R = r + d, d étant la longueur du segments, mesurée dans un plan passant par l'axe de rotation considéré. La raison de cette différence de configuration va mieux apparaître avec la description de la fermeture d'un moule ainsi constitué.

Le segment 1c est amené à sa position de fermeture. De proche en proche, par une rotation autour de l'axe 4 du segment précédent, les segments 1d sont amenés à leur position de fermeture, les faces transversales restant jointives. Finalement, toujours par rotation autour de l'axe 4 de segment précédent, le segment le glisse entre le dernier segment 1d et le segment 1c. La fermeture de ce moule est assurée tout en maintenant, en permanence, les faces transversales des segments jointives deux à deux. A chaque étape de la fermeture, le segment qui se ferme agit à la manière d'un piston pour repousser le caoutchouc cru qui a pu fluer lors de la fermeture du segment précédent. Dans une variante de réalisation, la couronne périphérique de segments peut être constituée par deux demi-chaînes qui se ferment l'une dans un sens circonférentiel, l'autre dans le sens opposé.

## Revendications

1. Moule utilisé pour le moulage et la vulcanisation de pneumatiques en caoutchouc, du type comportant

a)　un noyau rigide (3) définissant la surface intérieure du pneumatique,

b)　deux parties latérales (2), chacune servant au moulage extérieur d'un flanc du pneumatique,

c)　une couronne périphérique (1) divisée en plusieurs segments (1a, 1b) assurant le moulage extérieur de la bande de roulement,

l'ensemble des pièces (noyau rigide (3), parties latérales (2), couronne périphérique (1) de segments) définissant l'espace de moulage du pneumatique, caractérisé en ce qu'il comporte deux types de segments (1a, 1b) disposés alternativement le long de la périphérie, l'un des deux types de segments (type b) présentant des faces transversales parallèles entre elles, l'autre type de segment (type a) présentant, lorsque le moule est en position de fermeture, des faces transversales jointives (1b1, 1b2) aux faces transversales précédentes, et en ce que la ligne de jonction entre chaque partie latérale (2) et la couronne périphérique des segments (1) se prolonge en une surface de contact entre partie latérale (201) et segments (101), ladite surface de contact (201, 101) s'inscrivant dans un plan perpendiculaire à l'axe du moule.

2. Moule utilisé pour le moulage et la vulcanisation de pneumatiques en caoutchouc, du type comportant

a)　un noyau rigide (3) définissant la surface intérieure du pneumatique,

b)　deux parties latérales (2), chacune servant au moulage extérieur d'un flanc du pneumatique,

c)　une couronne périphérique (1) divisée en plusieurs segments (1a', 1b') assurant le moulage extérieur de la bande de roulement,

l'ensemble des pièces (noyau rigide (3), parties latérales (2), couronne périphérique de segments (1)) définissant l'espace de moulage du pneumatique, caractérisé en ce qu'il comporte deux types de segments (1a', 1b') disposés alternativement le long de la périphérie, l'un des deux types de segments (type b') présentant des faces transversales dont les prolongements radiaux présentent une intersection radialement à l'extérieur du moule, l'autre type de segment (type a') présentant, lorsque le moule est en position de fermeture, des faces transversales jointives (1a'1, 1a'2, 1b'1, 1b'2) aux faces transversales précédentes et en ce que la ligne de jonction entre chaque partie latérale (2) et la couronne périphérique des segments (1) se prolonge en une surface de contact (101', 201') entre partie latérale et segments, ladite surface de contact s'inscrivant dans un plan perpendiculaire à l'axe du moule.

3. Moule utilisé pour le moulage et la vulcanisation de pneumatiques en caoutchouc, du type comportant

a)　un noyau rigide (3) définissant la surface intérieure du pneumatique,

b)　deux parties latérales (2), chacune servant au moulage extérieur d'un flanc du pneumatique,

c)　une couronne périphérique (1) divisée en plusieurs segments (1c, 1d, 1e) assurant le moulage extérieur de la bande de roulement,

l'ensemble des pièces (noyau rigide (3), parties latérales (2), couronne périphérique de segments (1)) définissant l'espace de moulage du pneumatique, caractérisé en ce que les faces transversales de chaque segment (1da, 1dA) sont telles que leur intersection avec tout plan perpendiculaire à l'axe du moule est un arc de cercle, et en ce que la ligne de jonction entre chaque partie latérale (2) et la couronne périphérique des segments (1) se prolonge en une surface de contact (101', 102') entre partie latérale (2) et segments (1d, 1e), ladite surface de contact s'inscrivant dans un plan perpendiculaire à l'axe du moule.

4. Moule selon l'une des revendications 1 à 3, caractérisé en ce que

a)　la face radialement intérieure du noyau (3) est cylindrique,

b)　chaque partie latérale (2) comporte un prolongement (20) au-delà de la zone assurant le moulage de la surface radialement intérieure (302) des talons, ledit prolongement (20) comportant une face cylindrique telle que le prolongement (20) de chaque partie latérale peut coulisser à l'intérieur du noyau (3).

5. Procédé de mise en oeuvre d'un moule selon la revendication 1, caractérisé en ce que

a)　les parties latérales (2) sont d'abord rapprochées du noyau (3) portant l'ébauche crue du pneumatique jusqu'à ce que les parties latérales (2) entrent en contact avec le noyau (3) à leur position de fermeture,

b) les segments de type a sont amenés à leur position de fermeture,

c) les segments de type b sont ensuite amenés à leur position de fermeture.

6. Procédé de mise en oeuvre d'un moule selon la revendication 2, caractérisé en ce que, au moins en phase finale de fermeture du moule, toutes les faces transversales (1a'1, 1a'2, 1b'1, 1b'2) des segments sont jointives deux à deux et, le mouvement de rapprochement des segments de type a étant imposé, le rapprochement des segments de type b se fait suivant une cinématique imposée par le glissement des faces transversales des segments de type b (1b'1, 1b'2) sur les faces transversales des segments de type a (1a'1, 1a'2).

7. Procédé de mise en oeuvre du moule selon la revendication 3, caractérisé en ce qu'un premier segment (1c) est amené à sa position de fermeture puis de proche en proche, les segments successifs (1d, 1e) sont amenés à leur position de fermeture par un mouvement de rotation autour du segment précédent, les faces transversales (1da, 1dA) restant jointives.

8. Procédé de fabrication d'un pneumatique en caoutchouc dans lequel un moule rigide, du type comportant un noyau rigide (3) définissant la surface intérieure du pneumatique, deux parties latérales (2), chacune servant au moulage extérieur d'un flanc de pneumatique, et une couronne périphérique (1) divisée en plusieurs segments assurant le moulage extérieur de la bande de roulement, est utilisé pour imposer la forme et les dimensions finales du pneumatique, caractérisé en ce que l'ébauche de pneumatique est construite sur le noyau rigide (3) servant de support, puis les parties latérales (2) du moule sont amenées à leur position finale de fermeture et enfin les segments (1a, 1b/1a', 1b'/1c, 1d, 1e) sont amenés à leur position de fermeture en maintenant leurs faces transversales jointives (1a1, 1a2, 1b1, 1b2/1a'1, 1a'2, 1b'1, 1b'2/1c1, 1c2, 1da 1dA, 1e1, 1e2) deux à deux.

## Patentansprüche

1. Form zum Formen und Vulkanisieren von Kautschukluftreifenhüllen, von dem Typ, der

a) einen steifen Kern (3), der die innere Oberfläche des Reifens definiert,

b) zwei seitliche Teile (2), die jeweils dem Formen des Äußeren einer Flanke des Reifens dienen,

c) eine periphere Krone (1), die in mehrere Segmente (1a, 1b) geteilt ist und dem Formen der Außenseite der Lauffläche dient, aufweist,

wobei die Gesamtheit der Teile (steifer Kern (3), seitliche Teile (2), periphere segmentierte Krone (1), den Formraum des Luftreifens definiert, dadurch gekennzeichnet, daß sie zwei Typen von Segmenten (1a und 1b) aufweist, die abwechselnd entlang der Peripherie angeordnet sind, wobei einer der beiden Segmenttypen (Type b) zueinander parallele seitliche Seiten aufweist und der andere Segmenttyp (Typ a) seitliche Seiten (1b1, 1b2) aufweist, die in geschlossener Position der Form mit den zuerst genannten seitlichen Seiten zusammenfallen und dadurch, daß die Kontaktlinie zwischen jedem Seitenteil (2) und der segmentierten Krone (1) sich in einer Kontaktoberfläche zwischen dem Seitenteil (201) und den Segmenten (101) verlängert, wobei diese Kontaktoberfläche (201, 101) in einer Ebene rechtwinkelig auf die Achse der Form liegt.

2. Form zum Formen und Vulkanisieren von Kautschukluftreifenhüllen, von dem Typ, der

a) einen steifen Kern (3), der die innere Oberfläche des Reifens definiert,

b) zwei seitliche Teile (2), die jeweils dem Formen des Äußeren einer Flanke des Reifens dienen,

c) eine periphere Krone (1), die in mehrere Segmente (1a', 1b') geteilt ist und dem Formen der Außenseite der Lauffläche dient, aufweist,

wobei die Gesamtheit der Teile (steifer Kern (3), seitliche Teile (2), periphere segmentierte Krone (1), den Formraum des Luftreifens definiert, dadurch gekennzeichnet, daß sie zwei Typen von Segmenten (1a', 1b') aufweist, die abwechselnd entlang der Peripherie angeordnet sind, wobei einer der beiden Segmenttypen (Type b) seitliche Seiten aufweist, deren radiale Verlängerungen einen Schnitt radial außerhalb der Form besitzen und der andere Segmenttyp (Typ a) seitliche Seiten (1a'1, 1a'2, 1b'1, 1b'2) aufweist, die in geschlossener Position der Form mit den zuerst genannten seitlichen Seiten zusammenfallen und dadurch, daß die Kontaktlinie zwischen jedem Seitenteil (2) und der segmentierten Krone (1) sich in einer Kontaktoberfläche (101', 201') zwischen dem Seitenteil und den Segmenten verlängert, wobei diese Kontaktoberfläche in einer Ebene rechtwinkelig auf die Achse der Form liegt.

3. Form zum Formen und Vulkanisieren von Kautschukluftreifenhüllen, von dem Typ, der

a) einen steifen Kern (3), der die innere Oberfläche des Reifens definiert,

b) zwei seitliche Teile (2), die jeweils dem Formen des Äußeren einer Flanke des Reifens dienen,

c)      eine periphere Krone (1), die in mehrere Segmente (1c, 1d, 1e) geteilt ist und dem Formen der Außenseite der Lauffläche dient, aufweist,

wobei die Gesamtheit der Teile (steifer Kern (3), seitliche Teile (2), periphere segmentierte Krone (1), den Formraum des Luftreifens definiert, dadurch gekennzeichnet, daß die seitlichen Seiten (1da, 1dA) jedes Segmentes so ausgebildet sind, daß ihr Schnitt mit jeder Ebene rechtwinkelig auf die Formachse ein Kreisbogen ist und dadurch, daß die Kontaktlinie zwischen dem seitlichen Teil (2) und der segmentierten Krone (1) sich in einer Kontaktoberfläche (101', 102') zwischen dem Seitenteil (2) und den Segmenten (1d, 1e) verlängert, wobei diese Kontaktoberfläche in einer Ebene rechtwinkelig auf die Achse der Form liegt.

4. Form nach einem der Ansprüche 1 bis 3, dadurch gekennzeichnet, daß

a)      die radial innere Seite des Kernes (3) zylindrisch ist,

b)      jeder Seitenteil (2) eine Verlängerung (20) über das Gebiet hinausgehend, das die Formung der radial inneren Seite (302) des Reifenendes bewirkt, aufweist, wobei die Verlängerung (20) eine zylindrische Seite besitzt, so daß die Verlängerung (20) jedes Seitenteiles ins Innere des Kernes (3) gleiten kann.

5. Betätigungsverfahren einer Form nach Anspruch 1, dadurch gekennzeichnet, daß

a)      die Seitenteile (2) zuerst dem Kern (3), der den Reifenrohling trägt, genähert werden, bis die Seitenteile (2) mit dem Kern (3) durch die zylindrischen Kontaktoberflächen (202, 302) in ihrer Schließlage in Kontakt treten,

b)      die Segmente des Typs a in ihre Schließlage gebracht werden,

c)      die Segmente des Typs b in der Folge in ihre Schließlage gebracht werden.

6. Betätigungsverfahren einer Form nach Anspruch 2, dadurch gekennzeichnet, daß zumindest in der Endphase des Schließens der Form alle seitlichen Seiten (1a'1, 1a'2, 1b'1, 1b'2) der Segmente jeweils zwei und zwei zusammenfallen, die Annäherungsbewegung der Segmente der Type a bewirkt wird und die Annäherung der Segmente der Type b gemäß einer Kinematik erfolgt, die durch das Gleiten der seitlichen Seiten der Segmente der Type b (1b'1, 1b'2) auf den seitlichen Seiten der Segmente der Type a (1a'1, 1a'2) bedingt ist.

7. Betätigungsverfahren einer Form nach Anspruch 3, dadurch gekennzeichnet, daß ein erstes Segment (1c) in seine Schließlage gebracht wird, sodann Schritt für Schritt die aufeinanderfolgenden Elemente (1d, 1e) durch eine Drehbewegung um das vorhergehende Segment in ihre Schließlage gebracht werden, wobei die seitlichen Seiten (1da, 1dA) verbunden bleiben.

8. Herstellungsverfahren eines Kautschukluftreifens, bei dem eine steife Form von dem Typ, die einen steifen Kern (3), der die innere Oberfläche des Luftreifens definiert, zwei Seitenteile (2), die jeweils dem Formen der Außenseite einer Flanke eines Luftreifens dienen und eine periphere Krone (1), die in mehrere Segmente geteilt ist und das Formen des Äußeren der Lauffläche sichert, aufweist, verwendet wird, um die Endformen und Größen des Reifens zu erhalten, dadurch gekennzeichnet, daß der Reifenrohling auf einem steifen Kern (3), der als Träger dient, aufgebaut wird, daß sodann die seitlichen Teile (2) der Form in ihre Schließlage gebracht werden, worauf die Segmente (1a, 1b, 1a', 1b', 1c, 1d, 1e) in ihre Schließlage gebracht werden, wobei ihre seitlichen Seiten (1a1, 1a2, 1b1, 1b2/1a'1, 1a'2, 1b'1, 1b'2,/1c1, 1c2, 1da, 1dA, 1e1, 1e2) jeweils zwei und zwei verbunden gehalten werden.

## Claims

1. A mould used for moulding and vulcanising rubber tyres, of the type comprising

a)      a rigid core (3) defining the interior surface of the tyre,

b)      two side parts (2), each serving for exterior moulding of a sidewall of the tyre,

c)      a peripheral ring (1) divided into a plurality of segments (1a, 1b) ensuring exterior moulding of the tread,

all of the members [rigid core (3), side parts (2), peripheral ring (1) of segments] defining the moulding space for the tyre, characterised in that it comprises two types of segments (1a, 1b) arranged alternately along the periphery, one of the two types of segments (type b) having transverse faces which are parallel to each other, the other type of segment (type a), when the mould is in the closed position, having transverse faces (1b1, 1b2) which adjoin the preceding transverse faces, and in that the connecting line between each side part (2) and the peripheral ring of segments (1) is extented into a contact surface between the side part (201) and segments (101), said contact surface (201, 101) being inscribed in a plane perpendicular to the axis of the mould.

2. A mould used for moulding and vulcanising rubber tyres, of the type comprising

a) a rigid core (3) defining the interior surface of the tyre,

b) two side parts (2), each serving for exterior moulding of a sidewall of the tyre,

c) a peripheral ring (1) divided into a plurality of segments (1a', 1b') ensuring exterior moulding of the tread,

all of the members [rigid core (3), side parts (2), peripheral ring (1) of segments] defining the moulding space for the tyre,
characterised in that it comprises two types of segments (1a', 1b') arranged alternately along the periphery, one of the two types of segments (type b') having transverse faces, the radial extensions of which have an intersection radially to the outside of the mould, the other type of segment (type a'), when the mould is in the closed position, having transverse faces (1a'1, 1a'2, 1b'1, 1b'2) which adjoin the preceding transverse faces, and in that the connecting line between each side part (2) and the peripheral ring of segments (1) is extended into a contact surface (101', 201') between the side part and segments, said contact surface being inscribed in a plane perpendicular to the axis of the mould.

3. A mould used for the moulding and vulcanisation of rubber tyres, of the type comprising

a) a rigid core (3) defining the interior surface of the tyre,

b) two side parts (2), each serving for exterior moulding of a sidewall of the tyre,

c) a peripheral ring (1) divided into a plurality of segments (1c, 1d, 1e) ensuring exterior moulding of the tread,

all of the members [rigid core (3), side parts (2), peripheral ring (1) of segments] defining the moulding space for the tyre,
characterised in that the transverse faces of each segment (1da, 1dA) are such that their intersection with any plane perpendicular to the axis of the mould is an arc of a circle, and in that the connecting line between each side part (2) and the peripheral ring of segments (1) is extended into a contact surface (101', 102') between the side part (2) and segments (1d, 1e), said contact surface being inscribed in a plane perpendicular to the axis of the mould.

4. A mould according to one of Claims 1 to 3, characterised in that

a) the radially inner face of the core (3) is cylindrical,

b) each side part (2) comprises an extension (20) beyond the zone ensuring the moulding of the radially inner surface (302) of the beads, said extension (20) having a cylindrical face such that the extension (20) of each side part can slide inside the core (3).

5. A method of using a mould according to Claim 1, characterised in that

a) the side parts (2) are first of all brought toward the core (3) bearing the raw blank of the tyre until the side parts (2) come into contact with the core (3) in their closed position,

b) the segments of type a are brought into their closed position,

c) the segments of type b are then brought into their closed position.

6. A method for using a mould according to Claim 2, characterised in that, at least in the final phase of closing of the mould, all the transverse faces (1a'1, 1a'2, 1b'1) of the segments adjoin each other in pairs and, the movement of the bringing together of the segments of type a being imposed, the bringing together of the segments of type b is effected in accordance with kinematics imposed by the sliding of the transverse faces of the segments of type b (1b'1, 1b'2) on the transverse faces of the segments of type a (1a'1, 1a'2).

7. A method for using the mould according to Claim 3, characterised in that a first segment (1c) is brought into its closed position and then gradually the successive segments (1d, 1e) are brought into their closed position by a rotational movement around the preceding segment, the transverse faces (1da, 1dA) remaining adjoining.

8. A method for producing a rubber tyre in which a rigid mould, of the type comprising a rigid core (3) defining the interior surface of the tyre, two side parts (2), each serving for exterior moulding of a sidewall of the tyre, and a peripheral ring (1) divided into a plurality of segments ensuring exterior moulding of the tread, is used to impose the final shape and dimensions of the tyre, characterised in that the tyre blank is constructed on the rigid core (3) serving as a support, then the side parts (2) of the mould are brought into their final closed position, and finally the segments (1a, 1b/1a', 1b'/1c, 1d, 1e) are brought into their closed position while keeping their transverse faces (1a1, 1a2, 1b1, 1b2/1a'1, 1a'2, 1b'1, 1b'2/1c1, 1c2, 1da, 1dA, 1e1, 1e2) adjoining in pairs.

FIG. 1

FIG. 2

FIG . 4

FIG . 3

FIG .5

FIG.6

FIG. 7